# EUROPÄISCHE PATENTSCHRIFT

(11) **EP 3 650 292 B1**
(45) Veröffentlichungstag und Bekanntmachung des Hinweises auf die Patenterteilung: **14.06.2023**
(21) Anmeldenummer: 19204221.6
(22) Anmeldetag: 21.10.2019
(51) Int. Cl.: B60T 7/04, B60T 8/17, B60T 13/66

(54) **VERFAHREN ZUR FUNKTIONSÜBERPRÜFUNG EINES DRUCKMITTELBETRIEBENEN ELEKTRONISCHEN BREMSSYSTEMS EINES FAHRZEUGS**
METHOD FOR CHECKING THE OPERATION OF AN ELECTRONIC BRAKING SYSTEM OF A VEHICLE CONTROLLED WITH COMPRESSED AGENT
PROCÉDÉ DE VÉRIFICATION FONCTIONNELLE D'UN SYSTÈME DE FREINAGE ÉLECTRONIQUE ACTIONNÉ PAR FLUIDE SOUS PRESSION D'UN VÉHICULE

(30) Priorität: 07.11.2018 DE 102018127813
(43) Veröffentlichungstag der Anmeldung: 13.05.2020
(73) Patentinhaber: ZF CV Systems Europe BV, 1170 Brussels (BE)
(72) Erfinder: KLOSTERMANN, Thilo, 30890 Barsinghausen (DE); LÖLL, Jann, 26441 Jever (DE); SCHMIDT, Jakob Friedrich, 30449 Hannover (DE); DOMBEK, Dominika, 30167 Hannover (DE)
(74) Vertreter: ZF Friedrichshafen AG

(56) Entgegenhaltungen:
- EP-A2- 2 913 236
- DE-A1-102010 015 502
- DE-A1-102011 080 511
- DE-A1-102016 010 461

## Beschreibung

Die Erfindung betrifft ein Verfahren zur Funktionsüberprüfung eines druckmittelbetriebenen elektronischen Bremssystems eines Fahrzeugs, mit einer Ventil- und Sensoreinrichtung, aufweisend mindestens einen Steuerdruckeingang und mindestens einem Steuerdruckausgang, und bestehend aus mehreren Ventilen, welche als elektrisch betätigte Einlassventile, Auslassventile und Redundanzventile oder als Druckventile ausgebildet sind, und mit mindestens einem Ist-Drucksensor zur Erfassung und Signalisierung eines Ist-Steuerdrucks, sowie mit mindestens einem der Ventil- und Sensoreinrichtung zugeordneten Solldrucksensor zur Erfassung und Signalisierung eines Soll-Steuerdrucks, und mit einer elektronischen Steuereinheit, die mit den elektrisch betätigten Ventilen sowie den Drucksensoren zu deren Steuerung oder Signalerfassung signaltechnisch verbunden ist.

Elektronisch gesteuerte und mit hydraulischen und/oder pneumatischen Druckmitteln betriebene Bremssysteme bei Fahrzeugen, beispielsweise bei Nutzfahrzeugen mit Anhänger, sind allgemein bekannt. Die Bremsregelung an derartigen Fahrzeugen übernimmt üblicherweise eine elektronische Steuereinheit, welche die Bremsanlage des Fahrzeugs und gegebenenfalls eines Anhängefahrzeugs steuert. Zur Verwirklichung aller benötigten Funktionen eines derartigen Bremssystems sind eine Vielzahl von Ventilmitteln und Sensormitteln notwendig. Um Bremsvorgänge einzuleiten, weisen diese Bremssysteme eine oder mehrere Steuerdruckleitungen auf, mittels derer von einer Bremspedaleinheit oder anderen Steuermitteln ein dem Bremswunsch des Fahrers entsprechender Steuerdruck eingesteuert und an beispielsweise die Bremsanlagen des Nutzfahrzeugs und/oder an ein Anhängersteuerventil eines Anhängers übertragen wird. Dabei wird der angeforderte Steuerdruck üblicherweise zunächst von einem Solldrucksensor erfasst und ein entsprechendes Signal der elektronischen Steuereinheit zugeführt.

Der Fahrerwunsch kann zwar direkt in eine Einbremsung des Fahrzeugs umgesetzt werden. Allerdings beeinflusst der Fahrer bei elektronischen Bremssystemen die Radbremsen meistens nur noch indirekt, wodurch eine weitergehende elektronische Regelung der Bremsleistung über Fahrassistenzsysteme wie ein Antiblockiersystem oder eine Anfahrregelung ermöglicht wird. Insbesondere ermöglicht diese elektronische Regelung eine genaue Einstellung der Bremsleistung, um eine jeweils situationsangepasste effektive Abbremsung des Fahrzeugs zu erreichen. Das durch den Solldrucksensor der elektronischen Steuereinheit zugeführte Steuerdrucksignal ist dabei eine wichtige Eingangsgröße für die weitere Regelung des Bremssystems.

Liefert ein pneumatischer Solldrucksensor eines elektronischen Bremssystems, welcher den Fahrer-Bremsanforderungsdruck erfasst, aufgrund einer Fehlfunktion des Sensors der elektronischen Steuereinheit einen zu niedrigen Messwert, wird der durch die Steuereinheit eingeregelte Steuer- beziehungsweise Bremsdruck möglicherweise zu niedrig sein, mit der Folge, dass das Anhängefahrzeug nicht wie gewünscht eingebremst wird. Wenn dieser Sensor hingegen einen zu hohen Solldruck signalisiert, wird der daraus resultierende Steuerdruck möglicherweise zu hoch sein und es besteht die Gefahr, dass das Anhängefahrzeug unbeabsichtigt stark eingebremst wird. Daher sollen derartige Bremssysteme, auch im Hinblick auf zukünftige automatisiert gesteuerte Nutzfahrzeuge, bestimmte Sicherheitsintegritätsniveaus, wie Safety Integrity Level (SIL), Automotive Safety Integrity Level (ASIL) oder Performance Level (PL) erfüllen.

Um ein ausreichendes Sicherheitsintegritätsniveau von elektronischen Druckkontrollsystemen eines Bremssystems, beispielsweise bei einem elektronischen Anhängersteuerventil sicherzustellen, erfordert die sensorische Messung der Fahrzeugführer-Bremsanforderung bezüglich fehlerhafter Signale einen hohen Diagnosedeckungsgrad, welcher das Verhältnis durch Diagnosetests erkannter Fehler zur Gesamtausfallrate einer Komponente oder eines Teilsystems angibt. Bremssysteme der vorbezeichneten Art funktionieren in der Praxis zuverlässig und zufriedenstellend. Allerdings besteht trotzdem weiterer Verbesserungsbedarf hinsichtlich des Sicherheitsintegritätsniveaus.

EP2913236A2 offenbart ein Bremsmodul für ein hydraulisch gebremstes Zugfahrzeug, welches mit einem pneumatisch gebremsten Anhängerfahrtzeug koppelbar ist. Das Bremsmodul umfasst ein elektropneumatisches Druckregelmodul mit einer elektronischen Steuerung und eine Redundanzventilanordnung. Die Redundanzventilanordnung ist über hydraulische Druckleitung mit einem Druckbehälter verbunden. Im Falle eines Ausfalls wenigstens einer für den Betrieb relevanten elektrischen oder elektronischen Komponenten ist das elekto-pneumatische Druckregelungsmodul funktionslos. Damit das Zugfahrzeug und das Anhängerfahrzeug dennoch gebremst werden können, ist die Redundanzventilanordnung vorgesehen. Die Redundanzventilanordnung umfasst ein Redundanzventil und ein Druckuntersetzer-Relaisventil. Im Redundanzfall, also bei Ausfall der relevanten elektrischen oder elektronischen Komponenten, gelangt hydraulischer Druck zu einem hydraulischen Steuereingang des Druckuntersetzer-Relaisventils, wodurch ein Kolben des Druckuntersetzer-Relaisventils bewegt wird und ein mit dem Druckluftbehälter verbundener pneumatischer Ausgang verbunden wird, sodass der angesteuerte Druck zum Redundanzventil gelangt. Das Redundanzventil ist im unbestromten Zustand geöffnet. Bei funktionierender Elektronik bzw. elektrischer Anlage ist das Redundanzventil geschlossen, da dieses bestromt ist und in seine geschlossene Stellung gebracht ist, sodass die Redundanzventilanordnung nicht in Funktion ist. Die Redundanzventilanordnung weist ferner zwei Drucksensoren auf, die beide den hydraulischen Bremsdruck erfassen, wodurch die beiden Drucksensoren Druckverluste oder Leckage im hydraulischen System erfassen können. Wird nun ein entsprechender Druckunterschied vom System erkannt, kann eine entsprechende Fehlermeldung dem Fahrer angezeigt werden.

Vor diesem Hintergrund lag der Erfindung die Aufgabe zugrunde, ein Verfahren zur Funktionsüberprüfung eines druckmittelbetriebenen elektronischen Bremssystems eines Fahrzeugs vorzustellen, mit dem ein hohes Sicherheitsintegritätsniveau des Bremssystems erreicht wird. Insbesondere soll eine einfache und kostengünstige Funktionsüberprüfung eines Solldrucksensors des Bremssystems ermöglicht werden.

Zudem soll das Verfahren zur Durchführung an einem pneumatisch und/oder hydraulisch betriebenen elektronischen Bremssystem eines Nutzfahrzeugs geeignet sein. Die Lösung dieser Aufgabe wird mit einem Verfahren erreicht, welches die Merkmale des Anspruchs 1 aufweist. Vorteilhafte Weiterbildungen sind in den abhängigen Ansprüchen definiert. Zudem wird ein Fahrzeug mit einem elektronischen Bremssystem beansprucht, das ein Verfahren gemäß einem der Verfahrensansprüche durchführt.

Die gestellte Aufgabe wird gelöst durch ein Verfahren zur Funktionsüberprüfung eines druckmittelbetriebenen elektronischen Bremssystems eines Fahrzeugs, wobei das elektronische Bremssystem über eine Ventil- und Sensoreinrichtung verfügt. Diese Ventil- und Sensoreinrichtung weist mindestens einen Steuerdruckeingang, mindestens einen Steuerdruckausgang und mehrere Ventile auf, welche als elektrisch betätigte Einlassventile, Auslassventile, Redundanzventile oder als Druckventile ausgebildet sind. Außerdem weist die Ventil- und Sensoreinrichtung mindestens einen Ist-Drucksensor zur Erfassung und Signalisierung eines Ist-Steuerdrucks sowie mindestens einen der Ventil- und Sensoreinrichtung zugeordneten Solldrucksensor zur Erfassung und Signalisierung eines Soll-Steuerdrucks auf. Zudem ist eine elektronische Steuereinheit vorhanden, welche mit den elektrisch betätigten Ventilen sowie den Drucksensoren zu deren Steuerung oder Signalerfassung signaltechnisch verbunden ist.

Verfahrensgemäß ist vorgesehen,
dass der Solldrucksensor einen angeforderten sowie an einem ersten Steuerdruckeingang der Ventil- und Sensoreinrichtung anliegenden Soll-Steuerdruck zur Betätigung einer Fahrzeugbremse des Fahrzeugs misst und den gemessenen Soll-Steuerdruck der elektronischen Steuereinheit als ein Eingangssignal zusendet,
dass die Ventil- und Sensoreinrichtung einen Normalbetriebsmodus aufweist, in dem die elektronische Steuereinheit mittels des Soll-Steuerdrucks den Ist-Steuerdruck am Steuerdruckausgang aktiv regelt,
dass die Ventil- und Sensoreinrichtung einen Redundanzmodus aufweist, in dem bei schaltungstechnisch passiver Steuereinheit der an dem Steuerdruckausgang anliegende Ist-Steuerdruck unmittelbar von dem an dem ersten Steuerdruckeingang anliegenden Soll-Steuerdruck erzeugt ist,
dass sich die Ventil- und Sensoreinrichtung zur Funktionsüberprüfung des Solldrucksensors im Redundanzmodus befindet oder temporär in den Redundanzmodus geschaltet wird,
bei dem der Ist-Drucksensor den an dem Steuerdruckausgang anliegenden Ist-Steuerdruck misst und der elektronischen Steuereinheit signalisiert,
bei dem die elektronische Steuereinheit den im Redundanzmodus gemessenen Ist-Steuerdruck und den durch den Solldrucksensor der elektronischen Steuereinheit signalisierten Soll-Steuerdruck einer vergleichenden Plausibilitätsprüfung unterzieht, und
bei dem anhand der Plausibilitätsprüfung eine Fehlfunktion des Solldrucksensors erkannt und eine Fehlermeldung abgespeichert oder ausgegeben wird

Durch dieses Verfahren wird ein hohes Sicherheitsintegritätsniveau eines gattungsgemäßen elektronischen Bremssystems erreicht. Insbesondere kann durch Anwenden dieses Verfahrens ein hoher Diagnosedeckungsgrad des Bremssystems erreicht werden. Durch Verwenden eines bestehenden Drucksensors im elektronischen Bremssystem kann die korrekte Funktionsweise eines einzelnen Solldrucksensors überprüft werden. Eine externe Diagnoseeinrichtung ist dazu nicht erforderlich, wodurch Kosten eingespart werden können.

Verfahrensgemäß ist vorgesehen, dass die Umschaltung der Ventil- und Sensoreinrichtung zur Funktionsüberprüfung des Solldrucksensors in den Redundanzmodus erfolgt, wenn sich das Fahrzeug in einem vorgegebenen definierten Betriebszustand, wie beispielsweise "Fahrzeugstillstand" oder "Erster Bremsvorgang nach Start", befindet.

Demnach soll das Bremssystem bei bestimmten Bedingungen, beispielsweise im Fahrzeugstillstand oder bei einem ersten Bremsvorgang nach dem Start des Fahrzeugs, in den Redundanzmodus schalten. In dem Redundanzmodus soll der Soll-Steuerdruck mit dem Ist-Steuerdruck verglichen werden. Dazu soll der Ist-Drucksensor im Redundanzmodus, wenn die elektronische Steuereinheit nicht aktiv ist, den aktuellen Druck überwachen und erkennen, sofern der Solldrucksensor nicht den korrekten Druck signalisiert. Ein fehlerhaft arbeitender Solldrucksensor kann beispielsweise erkannt werden, wenn ein Steuerdruck von Null erwartet wird, der Solldrucksensor jedoch einen von Null unterschiedlichen Druckwert signalisiert. Ein fehlerhaft arbeitender Solldrucksensor kann beispielsweise auch erkannt werden, wenn durch den Ist-Drucksensor am Steuerdruckausgang der Ventil- und Sensoreinrichtung ein in der aktuellen Betriebssituation als plausibel betrachteter Druck gemessen wird und der gleiche Druckwert oder ein davon eindeutig herleitbarer Druckwert am Steuerdruckeingang erwartet wird, der Solldrucksensor jedoch einen signifikant anderen Druckwert signalisiert.

Die für die Funktionsüberprüfung des Solldrucksensors geeigneten Betriebszustände können vorteilhaft jeweils mit Hilfe von erfassten oder auf einem Bussystem des Fahrzeugs verfügbaren Betriebsdaten des Fahrzeugs, wie beispielsweise Fahrzeuggeschwindigkeit, Radgeschwindigkeit, Fahrzeuglängsbeschleunigung oder eingelegte Feststellbremse, ermittelt werden.

Das Verfahren ist für die Überprüfung der genauen Funktionsfähigkeit eines Solldrucksensors vorteilhaft an verschiedenen Bremsanlagen, wie Betriebsbremsanlagen oder Feststellbremsanlagen von Kraftfahrzeugen, anwendbar. Bei einer konkretisierten Ausführungsform kann vorgesehen sein, dass das Verfahren an einer als elektronischen Anhängersteuerventil ausgebildeten Ventil- und Sensoreinrichtung zum Ansteuern einer Anhängerbremsanlage eines Anhängefahrzeugs durchgeführt wird, wobei der Steuerdruckeingang ein Redundanzanschluss des Anhängersteuerventils ist, und wobei der Steuerdruckausgang mit einem Steuerdruck-Kupplungskopf zum Ankoppeln einer Bremsleitung des Anhängefahrzeugs verbunden ist.

Demnach kann die Integrität und genaue Funktionsfähigkeit des Solldrucksensors bei der Erfassung einer Bremsanforderung zur Betätigung einer Anhängerbremse überprüft werden. Die Gefahr einer überhöhten oder unzureichenden Einbremsung des Anhängefahrzeugs aufgrund eines falschen Soll-Steuerdrucksignals kann somit erkannt und eine geeignete Maßnahme zur Abhilfe veranlasst werden, beispielsweise der Austausch eines defekten Solldrucksensors.

Schließlich betrifft die Erfindung auch ein Fahrzeug, wie beispielsweise ein Nutzfahrzeug, als Einzelfahrzeug oder als Zugfahrzeug-Anhängefahrzeug-Kombination, mit einem elektronischen Bremssystem, das ein Verfahren gemäß einem der Verfahrensansprüche durchführt.

Die Erfindung wird nachstehend anhand von einem in der beigefügten Zeichnung dargestellten Ausführungsbeispiel näher erläutert. In der Zeichnung zeigt
Fig. 1 ein vereinfachtes Schaltschema einer als elektronisches Anhängersteuerventil ausgebildeten Ventil- und Sensoreinrichtung zur Durchführung eines Verfahrens gemäß der Erfindung,
Fig. 2 das Schaltschema gemäß Fig. 1 mit einem zeichnerisch hervorgehobenen Steuerdruckweg in einem Normalbetriebsmodus, und
Fig. 3 das Schaltschema gemäß Fig. 1 mit einem zeichnerisch hervorgehobenen Steuerdruckweg in einem Redundanzmodus.

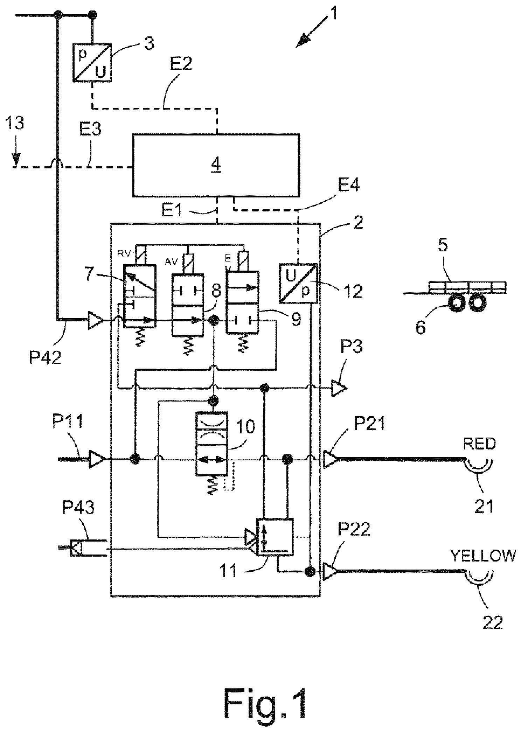

Fig. 1 zeigt demnach einen Teil eines Bremssystems 1, wie es beispielsweise für einen druckluftgebremsten landwirtschaftlichen Fahrzeugzug vorgesehen sein kann, bestehend aus einem nicht dargestellten Zugfahrzeug und einem in Fig. 1 lediglich angedeuteten Anhängefahrzeug 5. Die Darstellung in Fig. 1 und die folgende Beschreibung beschränken sich im Wesentlichen auf die für die Durchführung eines Verfahrens gemäß der Erfindung relevanten Komponenten eines derartigen Bremssystems. Die pneumatischen Anschlüsse und Leitungen sind mit Bezugsziffern in Anlehnung an die DIN ISO 6786 versehen. Zur besseren Abgrenzung zu den Bezugsziffern der Bauteile ist allen Bezugsziffern von pneumatischen Leitungen und Anschlüssen ein Präfix "P" und allen Bezugsziffern von elektrischen Leitungen ein Präfix "E" vorangestellt. So weist das in Fig. 1 in dargestellte Bremssystem 1 eine als elektro-pneumatisches Anhängersteuerventil ausgebildete Ventil- und Sensoreinrichtung 2 auf.

Die Ventil- und Sensoreinrichtung 2 zugeordnet und mit dieser elektrisch verbunden ist eine elektronische Steuereinheit 4 zur Steuerung einer in Fig. 1 lediglich angedeuteten Anhängerbremse 6 des Anhängefahrzeugs 5. Außerdem weist die Bremsanlage 1 ein nicht dargestelltes Betriebsbremsmodul für eine Betriebsbremsfunktion einer Betriebsbremse des Zugfahrzeugs sowie ein ebenfalls nicht dargestelltes Feststellbremsmodul für eine Feststellbremsfunktion des Zugfahrzeugs sowie für eine Feststellbremsfunktion des Anhängefahrzeugs 5 auf. Diese Module spielen hier keine Rolle und müssen daher nicht weiter behandelt werden. Dafür sei auf die deutschen Patentanmeldungen DE 10 2012 000 435 A1 und die DE 10 2014 002 614 A1 verwiesen.

Die Ventil- und Sensoreinrichtung 2 entspricht weitestgehend einem bekannten Anhängersteuerventil. Es weist drei als elektromagnetische Wegeventile ausgebildete Regelventile 7, 8, 9 auf. Das erste Regelventil 7 ist als ein 3/2-Wegeventil ausgebildet und fungiert als Redundanzventil. Das zweite Regelventil 8 ist als ein 2/2-Wegeventil ausgebildet und fungiert als Auslassventil. Das als Auslassventil fungierende zweite Regelventil 8 ist eingangsseitig pneumatisch an das als Redundanzventil fungierende erste Regelventil 7 angeschlossen. Das dritte Regelventil 9 ist ebenfalls als ein 2/2-Wegeventil ausgebildet und fungiert als Einlassventil. Das als Einlassventil fungierende dritte Regelventil 9 ist eingangsseitig pneumatisch mit dem zweiten Regelventil 8 sowie mit einem Drosselventil 10 verbunden.

Diese drei Regelventile 7, 8, 9 sind elektrisch parallel zueinander geschaltet und über eine aus mehreren Einzelverbindungen bestehende erste elektrische Verbindungsleitung E1 mit der elektronischen Steuereinheit 4 signaltechnisch verbunden. Die Regelventile 7, 8, 9 sind durch die elektronische Steuereinheit 4 zu deren Schaltung ansteuerbar. Die ersten und zweiten Regelventile 7, 8, also das Redundanzventil und das Auslassventil, sind stromlos durch Federkraft offen und können mittels Bestromen durch Magnetkraft und Überwinden der Federkraft geschlossen werden. Das dritte Regelventil 9, also das Einlassventil, ist stromlos geschlossen und kann durch Bestromen offen geschaltet werden.

Außerdem weist die Ventil- und Sensoreinrichtung 2 ein noch näher zu beschreibendes Druckventil 11 sowie einen Ist-Drucksensor 12 auf, welcher insbesondere den jeweiligen Ist-Druck an einem pneumatischen Steuerdruckausgang P22 erfasst und über eine vierte elektrische Verbindung E4 als Steuerparameter der elektronischen Steuereinheit 4 zur Verfügung stellt.

Die Ventil- und Sensoreinrichtung 2 weist drei pneumatische Eingänge P11, P42, P43 sowie drei pneumatische Ausgänge P3, P21, P22 auf. Der Vorratsdruck aus einem nicht dargestellten Druckmittelspeicher wird über eine ebenfalls nicht dargestellte pneumatische Verbindung und den pneumatischen Vorratsdruckeingang P11 durch die Ventil- und Sensoreinrichtung 2 hindurch geleitet und über einen Vorratsdruckausgang P21 zu einem mit "RED" markierten Vorratsdruck-Kupplungskopf 21 geführt. Der Vorratsdruck-Kupplungskopf 21 ist an einen entsprechenden Kupplungskopf einer nicht dargestellten Vorratsleitung der Anhängerbremse 6 des Anhängefahrzeugs 5 ankoppelbar.

Das erste Regelventil 7 ist pneumatisch direkt an den als pneumatischen Redundanzdruckeingang ausgebildeten ersten Steuerdruckeingang P42 angeschlossen. Das nicht dargestellte Feststellbremsmodul ist pneumatisch an den als pneumatischen Feststelldruckeingang ausgebildeten zweiten Steuerdruckeingang P43 angeschlossen. Der zweite Steuerdruckeingang P43 stellt eine pneumatische Verbindung zwischen dem nicht dargestellten Feststellbremsmodul und dem druckabhängig schaltenden mechanischen Druckventil 11 der Ventil- und Sensoreinrichtung 2 her. Zudem ist das Druckventil 11 eingangsseitig mit den übrigen Ventilen 7, 8, 9, 10 sowie mit dem Vorratsdruckeingang P11 funktional verbunden. Das Druckventil 11 ist ferner ausgangsseitig über einen Steuerdruckausgang P22 mit einem "YELLOW" markierten Steuerdruck-Kupplungskopf 22 verbunden. An diesen Steuerdruck-Kupplungskopf 22 kann ein entsprechender Kupplungskopf einer nicht dargestellten Steuerdruckleitung der Anhängerbremse 6 angekoppelt werden. Die nicht dargestellte Steuerdruckleitung der Anhängerbremse 6 versorgt die ebenfalls nicht dargestellten Bremszylinder des Anhängefahrzeugs 5. Außerdem weist die Ventil- und Sensoreinrichtung 2 noch einen Entlüftungsausgang P3 auf, der mit dem Druckventil 11 und mit dem als Redundanzventil fungierenden ersten Regelventil 7 pneumatisch verbunden ist.

Die elektrische sowie die pneumatische Verschaltung der Ventile 7, 8, 9, 10, 11 der Ventil- und Sensoreinrichtung 2 und die sich daraus ergebende Funktionsweise der Ventil- und Sensoreinrichtung 2 sind an sich bekannt und müssen hier nicht im Einzelnen beschrieben werden. Wichtig ist lediglich, dass die Ventil- und Sensoreinrichtung 2 über den als pneumatischen Redundanzdruckeingang ausgebildeten ersten Steuerdruckeingang P42 wahlweise in einem noch näher zu beschreibenden Redundanzmodus betrieben werden kann.

Der als pneumatischen Feststelldruckeingang ausgebildete zweite Steuerdruckeingang P43 weist eine invertierende Schaltcharakteristik auf. Diese besagt, dass eine Druckminderung an diesem Steuerdruckeingang P43 zu einer Druckerhöhung am Steuerdruckausgang P22 und eine Druckerhöhung am Steuerdruckeingang P43 zu einer Druckminderung am Steuerdruckausgang P22 führt. Die Anhängerbremse 6 wird somit beispielsweise betätigt, wenn der Steuerdruckeingang P43 der Ventil- und Sensoreinrichtung 2 entlüftet wird, und sie wird gelöst, wenn der Steuerdruckeingang P43 der Ventil- und Sensoreinrichtung 2 belüftet wird. Dies geschieht, sofern die Anhängerbremse 6 nicht mittels der Betriebsbremse entsprechend des am ersten Steuerdruckeingang P42 angeforderten Steuerdruck der Betriebsbremsanlage des Fahrzeugs in einem noch näher zu beschreibenden Normalbetriebsmodus oder in dem besagten Redundanzmodus betätigt wird.

Außerdem ist der Ventil- und Sensoreinrichtung 2 ein Solldrucksensor 3 zugeordnet. Der Solldrucksensor 3 ist mit dem als pneumatischen Redundanzdruckeingang ausgebildeten ersten Steuerdruckeingang P42 pneumatisch verbunden und über eine zweite elektrische Verbindungsleitung E2 mit der Steuereinheit 4 elektrisch verbunden. Der Solldrucksensor 3 misst einen von einer Bremspedaleinheit oder anderen Steuermitteln abhängigen, dem Bremswunsch des Fahrers entsprechenden Soll-SteuerDruck, und wandelt den Druckwert in ein elektrisches Signal um, welches der elektronischen Steuereinheit 4 als Eingangsparameter zur Verfügung gestellt wird.

Schließlich ist die elektronischen Steuereinheit 4 noch über eine dritte elektrische Verbindungsleitung E3 mit einem Bussystem 13 des Fahrzeugs, beispielsweise CAN, verbunden. Über das Bussystem 13 werden der elektronischen Steuereinheit 4 verschiedene relevante Informationen, wie beispielsweise Fahrzeuggeschwindigkeit, Fahrzeuglängsbeschleunigung und Radgeschwindigkeit der angetriebenen und zu bremsenden Fahrzeugräder zur Verfügung gestellt.

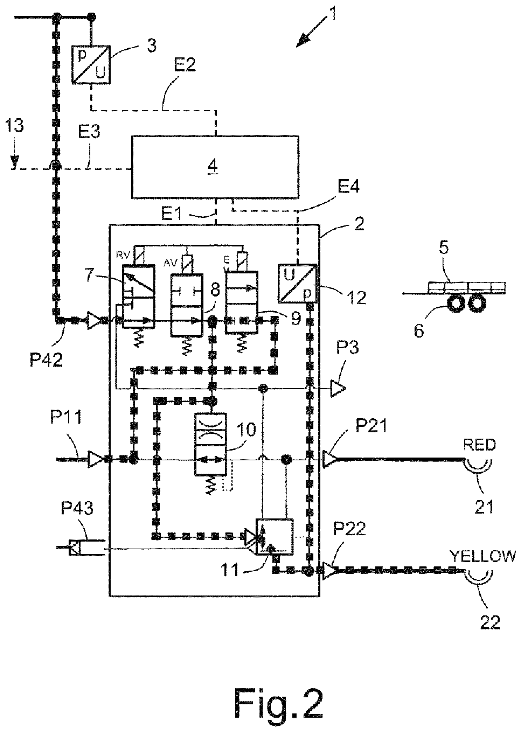

Die Fig. 2 zeigt die als Anhängersteuerventil ausgebildete Ventil- und Sensoreinrichtung 2 gemäß Fig. 1 in einem Normalbetriebsmodus. Die in diesem Modus mit dem pneumatischen Druckmittel beaufschlagten pneumatischen Anschlüsse und Verbindungen sind darin zeichnerisch hervorgehoben. Demnach liegt an dem ersten Steuerdruckeingangs P42 ein Bremsanforderungsdruck an. Dieser Bremsanforderungsdruck wird jedoch nicht direkt an die Ventil- und Sensoreinrichtung 2 geleitet, da das erste Regelventil 7, also das Redundanzventil, in diesem Normalbetriebsmodus geschlossen ist. Der Bremsanforderungsdruck wird jedoch von dem Solldrucksensor 3 gemessen und der elektronischen Steuereinheit 4 als Soll-Steuerdruckmesswert signalisiert. Die Steuereinheit 4 regelt dann mithilfe dieses Eingangsparameters den Steuerdruck am Steuerdruckausgang P22. Dazu wird das dritte Regelventil 9, also das Eingangsventil geöffnet und mit dem Vorratsdruckeingang P11 pneumatisch verbunden. Dadurch wird das Druckventil 11 mit pneumatischem Druck beaufschlagt und schaltet auf, so dass der Steuerdruckausgang P22 belüftet wird.

Der Steuerdruck kann über das dritte Regelventil 9, also das Einlassventil bis auf das Niveau des Druckmittelvorratdrucks eingestellt und bedarfsweise mittels des zweiten Regelventils 8 und des ersten Regelventils 7 abgesenkt werden. Dabei erfasst der Ist-Drucksensor 12 permanent den Ist-Steuerdruck am Steuerdruckausgang P22 und stellt das entsprechende Messsignal als Steuerungsparameter der elektronischen Steuereinheit 4 zur Verfügung.

Normalerweise misst der Solldrucksensor 3 den tatsächlichen Soll-Steuerdruck sehr genau, so dass die Steuereinheit 4 den korrekten und gewünschten Steuerdruck für die Beaufschlagung der Bremsanlage des Anhängers 5 einregelt. Signalisiert der Solldrucksensor 3 jedoch aufgrund eines Fehlers ein falsches Signal, so wird die Steuereinheit 4 einen falschen Steuerdruck einregeln. Um dies zu erkennen wird ein Verfahren gemäß der Erfindung durchgeführt, bei dem die Ventil- und Sensoreinrichtung 2 (Anhängersteuerventil) in einen Redundanzmodus geschaltet wird.

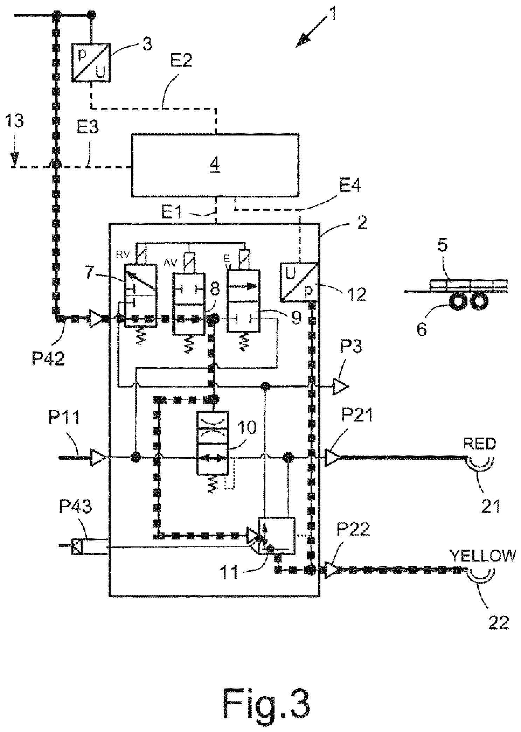

Die Fig. 3 zeigt die Ventil- und Sensoreinrichtung 2 (Anhängersteuerventil) in diesem Redundanzmodus. Die in diesem Betriebsmodus mit dem pneumatischen Druckmittel beaufschlagten pneumatischen Anschlüsse und Verbindungen sind darin wiederum zeichnerisch hervorgehoben dargestellt. Im Redundanzmodus ist die elektronische Steuereinheit 4 passiv; es findet also keine aktive Druckregelung statt. Alle drei Regelventile 7, 8, 9 sind demnach stromlos geschaltet. Der an dem ersten Steuerdruckeingang P42 anliegende Bremsanforderungsdruck wird direkt in die Ventil- und Sensoreinrichtung 2 eingeleitet. Dieser Soll-Steuerdruck schaltet hierbei das Druckventil 11 in seine Öffnungsstellung. Dementsprechend liegt der Soll-Steuerdruck unmittelbar auch am Steuerdruckausgang P22 der Ventil- und Sensoreinrichtung 2 an, so dass er dort von dem Ist-Drucksensor 12 als Ist-Steuerdruck messbar ist.

Um die einwandfreie Funktion des Solldrucksensors 3 zu überprüfen, wird das Bremssystem 1 bei bestimmten, vorab festgelegten und definierten Betriebszuständen des Fahrzeugs in den beschriebenen Redundanzmodus geschaltet. Der Ist-Drucksensor 12 überwacht den Ist-Steuerdruck in einem derart definierten Redundanzmodus am Steuerdruckausgang P22. Wird unter diesen definierten Bedingungen der elektronischen Steuereinheit 4 von dem Solldrucksensor 3 ein für diese Bedingungen nicht plausibler Soll-Steuerdruckmesswert übermittelt, erkennt die Steuereinheit 4 eine Fehlfunktion des Solldrucksensors 3, speichert diese in einem zugeordneten Speicher als Ereignis ab und zeigt diese Fehlfunktion in geeigneter Weise an.

Zusammenfassend lässt sich sagen, dass der Ist-Drucksensor 12 als ein Redundanzsensor verwendet wird, um den Solldrucksensor 3 einer Plausibilitätsprüfung zu unterziehen und dadurch ein hohes Sicherheitsintegritätsniveau der elektronischen Drucksteuerung in dem Bremssystem 1 sicherzustellen. Abschließend sei erwähnt, dass die Erfindung nicht auf das erläuterte Beispiel einer als Anhängersteuerventils ausgebildeten Ventil- und Sensoreinrichtung 2 beschränkt ist, sondern vielmehr an allen vergleichbar aufgebauten Ventil- und Sensoreinrichtungen von elektronischen Bremssystemen angewendet werden kann.

### Bezugszeichenliste (Teil der Beschreibung)

- 1: Bremssystem eines Fahrzeugs
- 2: Ventil- und Sensoreinrichtung, Anhängersteuerventil
- 3: Solldrucksensor des Anhängersteuerventils
- 4: Elektronische Steuereinheit
- 5: Anhängefahrzeug
- 6: Anhängerbremse
- 7: Erstes Regelventil des Anhängersteuerventils, Redundanzventil
- 8: Zweites Regelventil des Anhängersteuerventils, Auslassventil
- 9: Drittes Regelventil des Anhängersteuerventils, Einlassventil
- 10: Drosselventil des Anhängersteuerventils
- 11: Druckventil des Anhängersteuerventils
- 12: Ist-Drucksensor des Anhängersteuerventils
- 13: Bussystem, CAN-Bus
- 21: Vorratsdruck-Kupplungskopf
- 22: Steuerdruck-Kupplungskopf
- E1: Erste elektrische Verbindungsleitung
- E2: Zweite elektrische Verbindungsleitung
- E3: Dritte elektrische Verbindungsleitung
- E4: Vierte elektrische Verbindungsleitung
- P3: Entlüftungsausgang am Anhängersteuerventil
- P11: Vorratsdruckeingang am Anhängersteuerventil
- P21: Vorratsdruckausgang am Anhängersteuerventil
- P22: Steuerdruckausgang am Anhängersteuerventil
- P42: Erster Steuerdruckeingang am Anhängersteuerventil, Redundanzdruckeingang
- P43: Zweiter Steuerdruckeingang am Anhängersteuerventil, Feststelldruckeingang

## Patentansprüche

1. Verfahren zur Funktionsüberprüfung eines druckmittelbetriebenen elektronischen Bremssystems (1) eines Fahrzeugs, mit einer Ventil- und Sensoreinrichtung (2), aufweisend mindestens einen Steuerdruckeingang (P42, P43) und mindestens einen Steuerdruckausgang (P22), und bestehend aus mehreren Ventilen (7, 8, 9, 11), welche als elektrisch betätigte Einlassventile, Auslassventile und Redundanzventile oder als Druckventile ausgebildet sind, und mit mindestens einem Ist-Drucksensor (12) zur Erfassung und Signalisierung eines Ist-Steuerdrucks, sowie mit mindestens einem der Ventil- und Sensoreinrichtung (2) zugeordneten Solldrucksensor (3) zur Erfassung und Signalisierung eines Soll-Steuerdrucks, und mit einer elektronischen Steuereinheit (4), die mit den elektrisch betätigten Ventilen (7, 8, 9) sowie den Drucksensoren (3, 12) zu deren Steuerung oder Signalerfassung signaltechnisch verbunden ist, wobei
der Solldrucksensor (3) einen angeforderten sowie an einem ersten Steuerdruckeingang (P42) der Ventil- und Sensoreinrichtung (2) anliegenden Soll-Steuerdruck zur Betätigung einer Fahrzeugbremse (6) des Fahrzeugs misst und den gemessenen Soll-Steuerdruck der elektronischen Steuereinheit (4) als ein Eingangssignal zusendet, wobei
die Ventil- und Sensoreinrichtung (2) einen Normalbetriebsmodus aufweist, in dem die elektronische Steuereinheit (4) mittels des Soll-Steuerdrucks den Ist-Steuerdruck am Steuerdruckausgang (P22) aktiv regelt, wobei
die Ventil- und Sensoreinrichtung (2) einen Redundanzmodus aufweist, in dem bei schaltungstechnisch passiver Steuereinheit (4) der an dem Steuerdruckausgang (P22) anliegende Ist-Steuerdruck unmittelbar von dem an dem ersten Steuerdruckeingang (P42) anliegenden Soll-Steuerdruck erzeugt ist,
**dadurch gekennzeichnet,**
**dass** sich die Ventil- und Sensoreinrichtung (2) zur Funktionsüberprüfung des Solldrucksensors (3) im Redundanzmodus befindet oder temporär in den Redundanzmodus geschaltet wird, bei dem der Ist-Drucksensor (12) den an dem Steuerdruckausgang (P22) anliegenden Ist-Steuerdruck misst und der elektronischen Steuereinheit (4) signalisiert, bei dem die elektronische Steuereinheit (4) den im Redundanzmodus gemessenen Ist-Steuerdruck und den durch den Solldrucksensor (3) der elektronischen Steuereinheit (4) signalisierten Soll-Steuerdruck einer vergleichenden Plausibilitätsprüfung unterzieht, und bei dem anhand der Plausibilitätsprüfung eine Fehlfunktion des Solldrucksensors (3) erkannt und eine Fehlermeldung abgespeichert oder ausgegeben wird,
**dass** die Umschaltung der Ventil- und Sensoreinrichtung (2) zur Funktionsüberprüfung des Solldrucksensors (3) in den Redundanzmodus erfolgt, wenn sich das Fahrzeug in einem vorgegebenen definierten Betriebszustand befindet, und
**dass** die Umschaltung der Ventil- und Sensoreinrichtung (2) zur Funktionsüberprüfung des Solldrucksensors (3) in den Redundanzmodus erfolgt, wenn sich das Fahrzeug in dem Betriebszustand "Fahrzeugstillstand" oder "Erster Bremsvorgang nach Start" befindet.

2. Verfahren nach Anspruch 1, **dadurch gekennzeichnet, dass** ein Betriebszustand zur Aktivierung der Funktionsüberprüfung des Solldrucksensors (3) mit Hilfe von erfassten oder auf einem Bussystem (13) des Fahrzeugs verfügbaren Betriebsdaten des Fahrzeugs ermittelt wird.

3. Verfahren nach Anspruch 2, **dadurch gekennzeichnet, dass** ein Betriebszustand zur Aktivierung der Funktionsüberprüfung des Solldrucksensors (3) mit Hilfe von erfassten oder auf einem Bussystem (13) des Fahrzeugs verfügbaren Betriebsdaten des Fahrzeugs ermittelt wird, nämlich Fahrzeuggeschwindigkeit, Radgeschwindigkeit, Fahrzeuglängsbeschleunigung, eingelegte Feststellbremse.

4. Verfahren nach einem der Ansprüche 1 bis 3, **dadurch gekennzeichnet, dass** das Verfahren an einer Ventil- und Sensoreinrichtung zum Ansteuern einer Betriebsbremsanlage eines Kraftfahrzeugs durchgeführt wird.

5. Verfahren nach einem der Ansprüche 1 bis 4, **dadurch gekennzeichnet, dass** das Verfahren an einer Ventil- und Sensoreinrichtung zum Ansteuern einer Feststellbremsanlage eines Kraftfahrzeugs durchgeführt wird.

6. Verfahren nach einem der Ansprüche 1 bis 5, **dadurch gekennzeichnet, dass** das Verfahren an einer als elektronisches Anhängersteuerventil ausgebildeten Ventilund Sensoreinrichtung (2) zum Ansteuern einer Anhängerbremsanlage (6) eines Anhängefahrzeugs (5) durchgeführt wird, wobei der Steuerdruckeingang (P42) ein Redundanzdruckeingang der Ventil- und Sensoreinrichtung (2) ist, und wobei der Steuerdruckausgang (P22) mit einem Steuerdruck-Kupplungskopf (22) zum Ankoppeln einer Bremsleitung des Anhängefahrzeugs (5) verbunden ist.

7. Fahrzeug, wie Nutzfahrzeug, als Einzelfahrzeug oder als Zugfahrzeug-Anhänge-Fahrzeug-Kombination, mit einem elektronischen Bremssystem (1), das ein Verfahren gemäß einem der Verfahrensansprüche durchführt.

## Claims

1. Method for functionally testing a pressure-mediumoperated electronic brake system (1) of a vehicle, with a valve and sensor device (2) having at least one control pressure inlet (P42, P43) and at least one control pressure outlet (P22), and composed of a plurality of valves (7, 8, 9, 11) which are embodied as electrically activated inlet valves, outlet valves and redundancy valves or as pressure valves, and with at least one actual pressure sensor (12) for registering and signalling an actual control pressure, and with at least one setpoint pressure sensor (3) which is assigned to the valve and sensor device (2) and has the purpose of registering and signalling a setpoint control pressure, and with an electronic control unit (4) which has a signal-conducting connection to the electrically activated valves (7, 8, 9) and to the pressure sensors (3, 12) for controlling them or registering their signals, wherein
the setpoint pressure sensor (3) measures a requested setpoint control pressure which is present at a first control pressure inlet (P42) of the valve and sensor device (2) for the purpose of activating a vehicle brake (6) of the vehicle, and sends the measured setpoint control pressure to the electronic control unit (4) as an input signal, wherein
the valve and sensor device (2) has a normal operating mode in which the electronic control unit (4) actively regulates the actual control pressure at the control pressure outlet (P22) by means of the setpoint control pressure, wherein
the valve and sensor device (2) has a redundancy mode in which, when the control unit (4) is passive in terms of circuitry, the actual control pressure which is present at the control pressure outlet (P22) is generated directly by the setpoint control pressure which is present at the first control pressure inlet (P42),
**characterized**
**in that**, for the functional testing of the setpoint pressure sensor (3), the valve and sensor device (2) is in the redundancy mode or is temporarily switched into the redundancy mode in which the actual pressure sensor (12) measures the actual control pressure which is present at the control pressure outlet (P22) and signals it to the electronic control unit (4), in which the electronic control unit (4) subjects the actual control pressure measured in the redundancy mode and the setpoint control pressure signalled to the electronic control unit (4) by the setpoint pressure sensor (3) to comparative plausibility checking, and in which a malfunction of the setpoint pressure sensor (3) is detected, and a fault message is stored or output, on the basis of the plausibility checking,
**in that** the switching of the valve and sensor device (2) into the redundancy mode for the purpose of functionally testing the setpoint pressure sensor (3) occurs when the vehicle is in a specified defined operating state, and
**in that** the switching of the valve and sensor device (2) into the redundancy mode for the purpose of functionally testing the setpoint pressure sensor (3) occurs when the vehicle is in the "vehicle stationary state" operating state or in the "first braking process after starting" operating state.

2. Method according to Claim 1, **characterized in that** an operating state for activating the functional testing of the setpoint pressure sensor (3) is determined using operational data of the vehicle which are registered or are available on a bus system (13) of the vehicle.

3. Method according to Claim 2, **characterized in that** an operating state for activating the functional testing of the setpoint pressure sensor (3) is determined using operational data of the vehicle which are registered or are available on a bus system (13) of the vehicle, specifically the vehicle speed, wheel speed, longitudinal acceleration of the vehicle, engaged immobilizing brake.

4. Method according to one of Claims 1 to 3, **characterized in that** the method is carried out on a valve and sensor device for actuating a service brake system of a motor vehicle.

5. Method according to one of Claims 1 to 4, **characterized in that** the method is carried out on a valve and sensor device for actuating an immobilizing brake system of a motor vehicle.

6. Method according to one of Claims 1 to 5, **characterized in that** the method is carried out on a valve and sensor device (2) which is embodied as an electronic trailer control valve and has the purpose of actuating a trailer brake system (6) of a trailer vehicle (5), wherein the control pressure inlet (P42) is a redundancy pressure inlet of the valve and sensor device (2), and wherein the control pressure outlet (P22) is connected to a control pressure coupling head (22) for coupling a brake line of the trailer vehicle (5).

7. Vehicle, such as a utility vehicle, as a single vehicle or as a tractor vehicle-trailer vehicle combination, with an electronic brake system (1) which carries out a method according to one of the method claims.

## Revendications

1. Procédé permettant de contrôler le fonctionnement d'un système de freinage électronique (1), actionné par un fluide sous pression, d'un véhicule, comprenant un dispositif à soupapes et à capteurs (2) qui présente au moins une entrée de pression de commande (P42, P43) et au moins une sortie de pression de commande (P22) et qui est composé de plusieurs soupapes (7, 8, 9, 11) qui sont réalisées sous la forme de soupapes d'admission, de soupapes d'échappement et de soupapes redondantes ou de soupapes de compression à actionnement électrique, et comprenant au moins un capteur de pression réelle (12) pour détecter et signaler une pression de commande réelle, ainsi que comprenant au moins un capteur de pression théorique (3), associé au dispositif à soupapes et à capteurs (2), pour détecter et signaler une pression de commande théorique, et comprenant une unité de commande électronique (4) qui est reliée pour la transmission de signaux aux soupapes (7, 8, 9) à actionnement électrique ainsi qu'aux capteurs de pression (3, 12) pour les commander ou pour détecter des signaux, dans lequel
le capteur de pression théorique (3) mesure une pression de commande théorique demandée ainsi qu'une pression de commande théorique présente à une première entrée de pression de commande (P42) du dispositif à soupapes et à capteurs (2) pour actionner un frein de véhicule (6) du véhicule, et envoie la pression de commande théorique mesurée à l'unité de commande électronique (4) sous la forme d'un signal d'entrée, dans lequel
le dispositif à soupapes et à capteurs (2) présente un mode de fonctionnement normal dans lequel l'unité de commande électronique (4) régule activement la pression de commande réelle à la sortie de pression de commande (P22) au moyen de la pression de commande théorique, dans lequel
le dispositif à soupapes et à capteurs (2) présente un mode redondant dans lequel, lorsque l'unité de commande (4) est passive au niveau des circuits, la pression de commande réelle présente à la sortie de pression de commande (P22) est générée directement par la pression de commande théorique présente à la première entrée de pression de commande (P42),
**caractérisé en ce que** le dispositif à soupapes et à capteurs (2) permettant de contrôler le fonctionnement du capteur de pression théorique (3) se trouve en mode redondant ou est commuté temporairement en mode redondant dans lequel le capteur de pression réelle (12) mesure la pression de commande réelle présente à la sortie de pression de commande (P22) et la signale à l'unité de commande électronique (4), dans lequel l'unité de commande électronique (4) soumet la pression de commande théorique mesurée en mode redondant et la pression de commande théorique signalée par le capteur de pression théorique (3) à l'unité de commande électronique (4) à un contrôle de plausibilité comparatif, et dans lequel le contrôle de plausibilité permet d'identifier un dysfonctionnement du capteur de pression théorique (3) et un message d'erreur est enregistré ou émis,
**en ce que** la commutation du dispositif à soupapes et à capteurs (2) permettant de contrôler le fonctionnement du capteur de pression théorique (3) a lieu en mode redondant si le véhicule se trouve dans un état de fonctionnement défini spécifié, et
**en ce que** la commutation du dispositif à soupapes et à capteurs (2) permettant de contrôler le fonctionnement du capteur de pression théorique (3) a lieu en mode redondant si le véhicule se trouve dans l'état de fonctionnement « arrêt du véhicule » ou « première opération de freinage après démarrage ».

2. Procédé selon la revendication 1, **caractérisé en ce qu'**un état de fonctionnement pour l'activation du contrôle de fonctionnement du capteur de pression théorique (3) est établi à l'aide de données de fonctionnement du véhicule, détectées ou disponibles sur un système de bus (13) du véhicule.

3. Procédé selon la revendication 2, **caractérisé en ce qu'**un état de fonctionnement pour l'activation du contrôle de fonctionnement du capteur de pression théorique (3) est établi à l'aide de données de fonctionnement du véhicule, détectées ou disponibles sur un système de bus (13) du véhicule, notamment de la vitesse de véhicule, de la vitesse des roues, de l'accélération longitudinale du véhicule, du frein de stationnement serré.

4. Procédé selon l'une quelconque des revendications 1 à 3, **caractérisé en ce que** le procédé est exécuté sur un dispositif à soupapes et à capteurs servant à piloter une installation de frein de service d'un véhicule automobile.

5. Procédé selon l'une quelconque des revendications 1 à 4, **caractérisé en ce que** le procédé est exécuté sur un dispositif à soupapes et à capteurs pour piloter une installation de frein de stationnement d'un véhicule automobile.

6. Procédé selon l'une quelconque des revendications 1 à 5, **caractérisé en ce que** le procédé est exécuté sur un dispositif à soupapes et à capteurs (2) réalisé sous la forme d'une soupape électronique de commande de remorque pour piloter une installation de frein de remorque (6) d'un véhicule tracté (5), dans lequel l'entrée de pression de commande (P42) est une entrée de pression redondante du dispositif à soupapes et à capteurs (2), et dans lequel la sortie de pression de commande (P22) est reliée à une tête d'accouplement de pression de commande (22) pour accoupler une conduite de frein du véhicule tracté (5).

7. Véhicule, tel qu'un véhicule utilitaire, sous forme de véhicule individuel ou d'une combinaison d'un véhicule tracteur et d'un véhicule tracté, comprenant un système de freinage électronique (1) qui exécute un procédé selon l'une quelconque des revendications de procédé.
